# FASCICULE DE BREVET EUROPEEN

(11) **EP 0 956 979 B1**
(45) Date de publication et mention de la délivrance du brevet: **26.02.2003**
(21) Numéro de dépôt: 99400603.9
(22) Date de dépôt: 12.03.1999
(51) Int. Cl.: B60B 33/00

(54) **Roulette avec flasques de protection pour meubles et appareils divers**
Laufrolle mit Schutzflanschen für Möbel und verschiedene Geräte
Castor with protective flanges for furniture and various equipments

(30) Priorité: 14.05.1998 FR 9806074
(43) Date de publication de la demande: 17.11.1999
(73) Titulaire: BRUANDET S.A., F-39700 Orchamps (FR)
(72) Inventeur: Bruandet, Jean-René, 39700 Labarre (FR)
(74) Mandataire: Flavenot, Bernard

(56) Documents cités:
- EP-A- 0 123 298
- DE-A- 3 614 127
- DE-U- 8 707 763
- US-A- 4 122 580
- US-A- 5 593 461

## Description

La présente invention concerne les roulettes qui sont aptes à être associées à des objets du type meubles ou analogues, comme des fauteuils, tables, armoires, appareils divers, etc, en vue de favoriser leur déplacement sur une surface donnée, aussi bien le sol d'une habitation, d'un lieu de travail, etc, qu'un sol extérieur, quelle que soit la nature de ce sol, par exemple un plancher, une moquette, des dalles, de la terre, des graviers, etc.

En effet, pour pouvoir plus facilement déplacer un meuble sur un sol, on munit généralement ses pieds de roulettes. Une telle roulette selon l'art antérieur comprend essentiellement une roue apte à rouler sur le sol, une chape comportant généralement deux bras comportant chacun au moins un palier, et un arbre de rotation pour monter la roue en rotation sur les deux paliers.

Il est cependant connu que, au bout d'un certain temps d'utilisation, ces roulettes amassent une quantité non négligeable de poussière, fibres, filaments ou analogues, généralement désignés sous le terme unique de "fils". Ces fils s'enroulent autour de l'arbre de rotation et empêchent la roulette de tourner parfaitement, jusqu'à lui interdire de jouer le rôle auquel elle était destinée.

Pour éliminer le risque d'enroulement de fils autour de l'arbre de rotation, ou au moins le retarder le plus longtemps possible, il est possible de munir les roulettes de flasques également connus dans le domaine technique des roulettes sous la dénomination de "pare-fils". De telles roulettes correspondent au préambule de la revendication 1 sont par exemple connues dans le DE-A-3 614 127 et/ou le USA-A-5 593 461 et/ou le EP-A-0 123 298.

Chaque roulette est alors munie de deux flasques. Chaque flasque est interposé entre une face latérale de la roue et le bras correspondant de la chape, en étant sensiblement centré sur l'axe de l'arbre de rotation et en s'appuyant sur la face latérale à laquelle il est associé et sur le bord du palier correspondant, de façon à protéger au maximum la partie de l'arbre de rotation qui se trouve entre la face latérale de la roue et le bord du palier tourné vers la roue.

Les roulettes qui comportent ces flasques sont donc relativement bien protégées contre l'entrée de fils et l'enroulement de ces fils autour des arbres de rotation.

En revanche leur réalisation, c'est-à-dire l'assemblage de leurs principaux éléments constitutifs, à savoir: la chape, la roue, les deux flasques et l'arbre de rotation, pose un problème qui n'a été résolu que par la mise en oeuvre d'un assemblage à la main.

On peut alors concevoir qu'un tel assemblage contribue à augmenter considérablement le coût de revient d'une telle roulette.

La présente invention a ainsi pour but de réaliser une roulette qui comporte essentiellement une chape, une roue, deux flasques et un arbre de rotation, qui obvie aux inconvénients des roulettes de l'art antérieur et dont l'assemblage puisse être effectué de façon automatique notamment au moyen de robots ou analogues.

Plus précisément, la présente invention a pour objet une roulette apte à être associée à un objet du type meuble ou analogue en vue de favoriser son déplacement sur une surface donnée, comprenant:
- une roue apte à rouler autour d'un premier axe,
- une chape comportant au moins un bras, ledit bras comportant un palier définissant un deuxième axe,
- un arbre de rotation pour monter ladite roue en rotation par rapport au palier, et
- au moins un flasque interposé entre une face latérale de la roue et le bras, ledit flasque présentant sensiblement la forme générale d'une poche sphérique centrée sur un troisième axe,
caractérisée par le fait qu'elle comporte en outre:
- des moyens pour accrocher ledit flasque à ladite roue de façon que lesdits premier et troisième axes soient confondus, et
- des moyens pour lier au moins un point dudit bras par rapport audit flasque de façon que lesdits deuxième et troisième axes soient confondus.

D'autres caractéristiques et avantages de la présente invention apparaîtront au cours de la description suivante donnée en regard des dessins annexés à titre illustratif, mais nullement limitatif, dans lesquels:

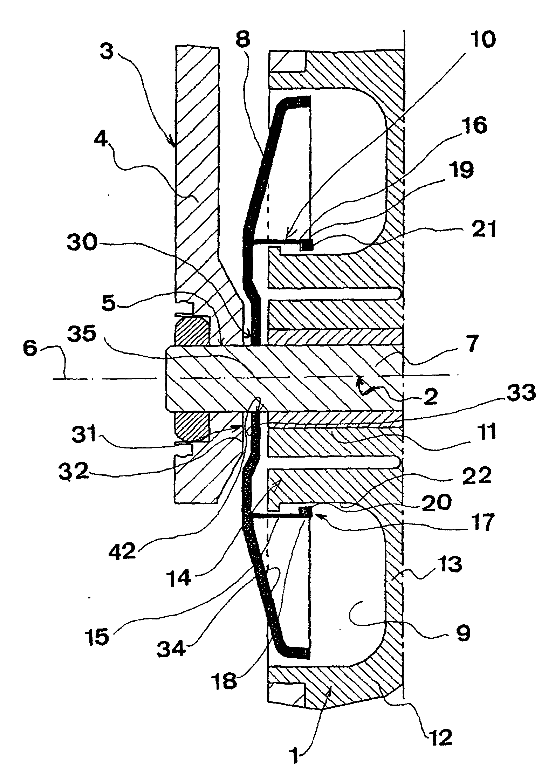

La figure 1 représente une vue en coupe partielle schématique d'un mode de réalisation d'une demi-roulette selon l'invention, la vue d'une telle demi-roulette illustrant une roulette coupée suivant un plan de symétrie perpendiculaire à son arbre de rotation étant bien connue des hommes du métier, et

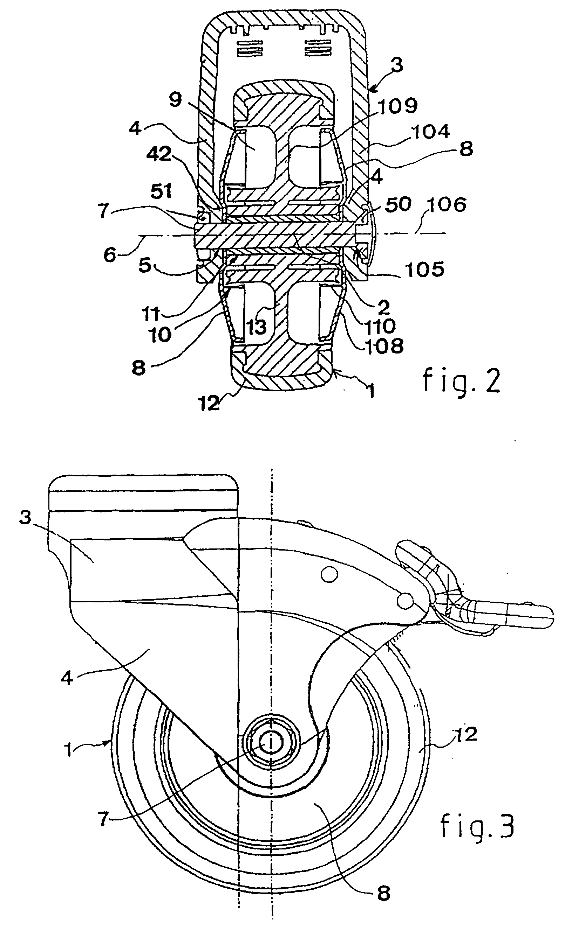

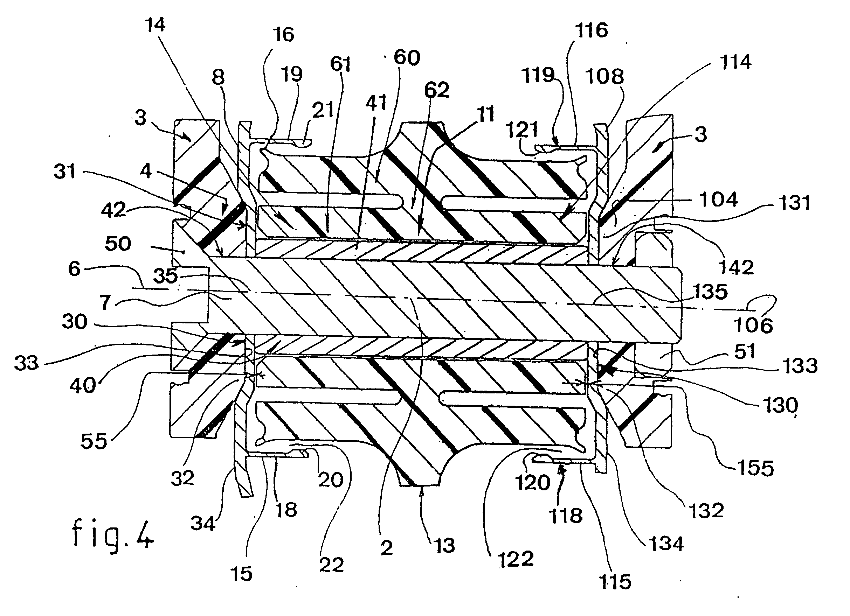

Les figures 2 à 4 représentent un autre mode de réalisation de la roulette selon l'invention, préférentiel sur le plan industriel, la figure 2 représentant une coupe transversale de la roulette selon la coupe référencée II-II sur la figure 3, cette figure 3 étant une vue de côté de ladite roulette et la figure 4 étant une vue agrandie d'un détail de la figure 2.

La Demanderesse tient à préciser que ces figures ne représentent que deux modes de réalisation de l'objet selon l'invention, mais qu'il peut exister d'autres modes de réalisation qui répondent à la définition de cette invention.

Elle précise en outre que, lorsque, selon la définition de l'invention, l'objet de l'invention comporte "au moins un" élément ayant une fonction donnée, les modes de réalisation décrits peuvent comporter plusieurs de ces éléments.

Il précise aussi que, si les modes de réalisation de l'objet selon l'invention tel qu'illustrés comportent plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

Bien que les figures représentent deux modes de réalisation différents de la roulette selon l'invention, dans l'unique souci de faciliter la compréhension de la présente description, les moyens fonctionnellement identiques y sont désignés sous les mêmes références, quelle que soit la figure sur laquelle apparaissent ces références.

La figure 1, représente un mode de réalisation d'une demi-roulette qui permet de mettre en évidence les caractéristiques structurelles de l'invention.

Selon cette réalisation illustrée sur la figure 1, la roulette comprend une roue 1 apte à rouler autour d'un premier axe de rotation 2, une chape 3 comportant au moins un bras 4 qui comporte un palier 5 définissant un deuxième axe de rotation 6, un arbre de rotation 7 pour monter la roue 1 en rotation par rapport au palier 5, et un flasque 8 interposé entre une face latérale 9 de la roue 1 et le bras 4, le flasque présentant sensiblement la forme générale d'une poche sphérique 34 centrée sur un troisième axe 35.

La roulette comporte en outre des moyens 10 pour accrocher le flasque à la roue de façon que les premier 2 et troisième 35 axes soient sensiblement confondus, et des moyens 30 pour lier au moins un point du bras 4 au flasque 8 de façon que les deuxième 6 et troisième 35 axes soient confondus.

Selon une réalisation avantageuse, lorsque la roue 1 comporte un essieu 11, une bande de roulement 12 et une paroi de liaison 13 pour solidariser l'essieu 11 avec la bande de roulement 12, l'essieu comportant une portion d'essieu 14 en saillie par rapport à la paroi de liaison 13, les moyens 10 pour accrocher le flasque 8 à la roue 1 comportent au moins deux pattes de centrage 15, 16 du flasque sur la portion d'essieu en saillie 14, des moyens pour solidariser une extrémité de chaque patte de centrage avec le flasque, par exemple une soudure ou une réalisation du flasque et de la patte en une seule pièce par moulage comme décrit ci-après, et des moyens 17 pour clipser l'extrémité libre 18, 19 de chaque patte de centrage sur la portion d'essieu en saillie.

De façon préférentielle, ces derniers moyens 17 pour clipser l'extrémité libre 18, 19 de chaque patte de centrage 15, 16 sur la portion d'essieu en saillie 14 sont constitués par au moins un ergot rentrant 20, 21 disposé sur l'extrémité libre et au moins une gorge 22 réalisée dans la portion d'essieu en saillie 14 de façon que les ergots rentrants 20, 21 soient aptes à plonger dans cette gorge 22, les pattes et/ou la portion d'essieu en saillie dans laquelle est réalisée la gorge étant réalisées en un matériau élastique pour présenter une déformation élastique en flexion. Dans les modes de réalisation illustrés sur les figures ce sont uniquement les pattes 15, 16 qui présentent cette déformation élastique en flexion.

Dans le mode de réalisation plus particulièrement illustré sur les figures 2 à 4, la portion d'essieu en saillie comporte une partie périphérique 60 relativement massique et une partie centrale 61 couplée à cette partie périphérique par une bague 62 de faible épaisseur.

Dans les modes de réalisation illustrés, les ergots 20, 21 sont rentrants et aptes à s'éloigner de l'axe 35 et les pattes 16, 18 entourent extérieurement la partie en saillie 14. Cependant, il est bien évident que cette réalisation est fonctionnellement équivalente à celle dans laquelle les pattes entoureraient la partie en saillie 14 par l'intérieur et les ergots seraient alors dirigés en s'éloignant de l'axe 35. Cette dernière réalisation n'a pas été spécifiquement illustrée car elle se déduit très facilement de celle qui est représentée sur la figure 1.

Il en outre précisé que par "patte" il est entendu aussi bien une patte de forme plate qu'une patte formée par un manchon circulaire ou analogue, comme représenté sur les figures, ou constituée d'une pluralité de pattes élémentaires associées les unes aux autres en parallèle.

Quant aux moyens 30 pour lier au moins un point du bras 4 au flasque 8 de façon que les deux axes 6 et 35 soient confondus, ils sont avantageusement constitués par un emboîtement 31 comportant deux parties complémentaires respectivement mâle 32 et femelle 33, la partie mâle 32 étant réalisée sur l'un des deux éléments suivants: flasque 8 et bras 4, la partie femelle 33 étant réalisée sur l'autre élément. De préférence, l'emboîtement mâle-femelle 31 est du type conique et la partie mâle 32 de l'emboîtement conique est réalisée sur le bras 4 en étant sensiblement centrée sur le deuxième axe 6, tandis que la partie femelle 33 de l'emboîtement conique est réalisée sur le flasque 8 en étant sensiblement centrée sur le troisième axe 35.

Il a été décrit ci-dessus un premier mode de réalisation d'une roulette selon l'invention. Cependant, il peut être avantageux que la roulette présente une structure comme celle plus particulièrement illustrée sur les figures 2 à 4.

Bien que le mode de réalisation selon les figures 2 à 4 de la roulette soit différent de celui illustré sur la figure 1, la roulette représentée sur ces figures 2 à 4 comporte toutes les caractéristiques structurelles décrites ci-dessus en regard de la figure 1. En conséquence, pour faciliter la compréhension de la description suivante et l'accorder avec celle décrite en regard de la figure 1, les éléments représentés sur la partie gauche des figures 2 et 4 par rapport au plan de symétrie de la roulette perpendiculaire à son axe de rotation portent les mêmes références que les éléments représentés sur la figure 1 et, pour désigner les éléments de la partie droite de ces figures 2 et 4 symétriques par rapport aux éléments correspondants dans la partie gauche, il a été utilisé des références obtenues en ajoutant une centaine aux références des éléments de la partie gauche.

Plus précisément, la roulette selon les figures 2 à 4 comporte une roue 1 apte à rouler autour d'un premier axe 2, la roue comportant un essieu 11, une bande de roulement 12 et une paroi de liaison 13 pour solidariser l'essieu avec la bande de roulement, l'essieu comportant deux portions d'essieu 14, 114 respectivement en saillie des deux faces latérales 9 et 109 de la roue 1 de part et d'autre de sa paroi de liaison 13.

La roulette comporte en outre une chape 3 comportant deux bras 4, 104 comportant chacun un palier 5, 105, les deux paliers définissant un même deuxième axe 6, 106, un arbre 7 pour monter la roue en rotation par rapport aux deux paliers 5, 105 de façon qu'elle soit située entre les deux bras et que les premier et deuxième axes 2, 6, 106 soient confondus, deux flasques 8, 108 interposés respectivement entre les deux faces latérales 9, 109 de la roue et les deux bras 4, 104, les deux flasques 8, 108 présentant sensiblement la forme générale de poches sphériques 34, 134 respectivement centrées sur un troisième 35 et un quatrième 135 axes.

Selon une caractéristique de l'invention, la roulette comporte des moyens 10, 110 pour accrocher les deux flasques à la roue de façon que les premier 2, troisième 35 et quatrième 135 axes soient confondus, et des moyens 30, 130 pour lier au moins un point de chaque bras 4, 104 à un flasque 8, 108 de façon que les deuxième, troisième et quatrième axes 6, 106, 35, 135 soient confondus.

Dans une réalisation avantageuse, la roulette comporte en outre au moins une entretoise 40 ayant une longueur L_{f} supérieure à la longueur Lₑ de l'essieu 11, l'entretoise étant disposée entre les deux flasques 8, 108 pour les maintenir à une distance l'un de l'autre supérieure à la longueur Lₑ de l'essieu. Cette entretoise est avantageusement constituée par un manchon 41 entourant l'arbre 7 en étant interposé entre l'arbre et l'essieu.

De préférence, chaque flasque 8, 108 comporte une percée centrale 42, 142 centrée sur les axes 35 et 135 définis ci-avant et réalisée de façon à pouvoir être traversée par l'arbre 7. Dans ce but, le diamètre de ces percées a une valeur supérieure à celle du diamètre de l'arbre 7.

De préférence, le diamètre de ces percées aura cependant une valeur inférieure à celle du diamètre extérieur du manchon 41.

De cette façon, les deux flasques sont en appui sur les deux extrémités du manchon 41 en étant pincés, au niveau des bords des percées 42, 142, entre les extrémités du manchon 41 et les bords des paliers 5 et 105.

De plus, comme la longueur du manchon L_{f} est supérieure à celle de l'essieu Lₑ, il existe, entre les deux flasques 8, 108 et l'essieu 11, un jeu illustré par les références 55 et 155 sur la figure 4, ce qui permet à la roue 1 de tourner sans frottement contre ces flasques qui, dans les modes de réalisation illustrés, sont fixes par rapport à la chape 3.

La structure de roulette décrite ci-dessus facilite l'assemblage des différents éléments constitutifs de cette roulette et permet même de l'effectuer de façon automatique au moyen par exemple de robots ou analogues, processus qui n'était pas possible avec les structures de roulettes de l'art antérieur comportant le même nombre d'éléments essentiels, à savoir une roue, une chape, deux flasques et un arbre de rotation.

En effet, il est facile d'assembler tout d'abord les deux flasques 8, 108 avec la roue 1, tout simplement en emboîtant les extrémités libres 18, 118, 19, 119 des pattes de centrage 15, 115, 16, 116 dans la portion d'essieu en saillie et en enclipsant les ergots 20, 120, 21, 121 dans les gorges 22, 122. Les flasques sont alors accrochés à la roue et les axes 2, 35 et 135 sont confondus.

L'ensemble constitué par la roue et les deux flasques est alors introduit entre les deux bras 4, 104 de la chape 3. Il suffit de le glisser entre ces deux bras et de le pousser jusqu'à la coopération des parties mâles 32, 132 et femelles 33, 133 des deux emboîtements coniques. Tout d'abord, les bras relativement élastiques du fait de la nature même du matériau dans lequel ils sont réalisés s'écartent, puis se referment lors de la constitution des emboîtements coniques.

Tous les axes 2, 6, 35, 106, 135 sont alors confondus et les éléments suivants: la roue, les deux flasques et la chape via ses deux bras, se maintiennent les uns les autres.

Bien entendu le maintien obtenu n'est qu'un maintien provisoire mais suffisant pour permettre l'assemblage comme décrit ci-dessus. Pour finaliser cet assemblage et obtenir la configuration finale illustrée sur les figures 2, 3 et 4, l'arbre 7 est enfilé sans difficulté dans les paliers 5, 105, les percées 42, 142 et l'essieu 11.

Selon une réalisation possible illustrée sur la figure 4, l'arbre 7 peut être constitué par une vis 50 terminée par un écrou 51.

Bien entendu, les flasques 8, 108 y compris les parties femelles 33, 133 des emboîtements coniques 31, 131, les pattes 15, 16, 115, 116 et les ergots 20, 21, 120, 121 seront réalisés en une seule pièce, par exemple par moulage en matière plastique, de même que la chape 3 avec ses bras 4, 104 et les parties mâles 32, 132 des mêmes emboîtements 31, 131.

En revanche, la vis 50 et l'écrou 51 seront avantageusement réalisés en matériau métallique, comme de l'acier ou analogue .

## Revendications

1. Roulette apte à être associée à un objet du type meuble ou analogue en vue de favoriser son déplacement sur une surface donnée, comprenant:
- une roue (1) apte à rouler autour d'un premier axe (2),
- une chape (3) comportant au moins un bras (4), ledit bras comportant un palier (5) définissant un deuxième axe (6),
- un arbre (7) pour monter ladite roue (1) en rotation par rapport au palier (5),
- un flasque (8) interposé entre une face latérale (9) de la roue et le bras, ledit flasque présentant sensiblement la forme générale d'une poche sphérique (34) centrée sur un troisième axe (35), et
- des moyens (10) pour accrocher ledit flasque à ladite roue de façon que les premier (2) et troisième (35) axes soient confondus,
**caractérisée par le fait qu'**elle comporte en outre:
- des moyens (30) pour lier au moins un point dudit bras (4) audit flasque (8) de façon que les deuxième (6) et troisième (35) axes soient confondus.

2. Roulette selon la revendication 1, dans laquelle ladite roue comporte un essieu (11), une bande de roulement (12) et une paroi de liaison (13) pour solidariser l'essieu (11) avec la bande de roulement (12), ledit essieu comportant une portion d'essieu (14) en saillie par rapport à ladite paroi de liaison (13), **caractérisée par le fait que** les moyens (10) pour accrocher ledit flasque (8) à ladite roue (1) comportent au moins deux pattes (15, 16) de centrage dudit flasque sur la portion d'essieu en saillie (14), des moyens pour solidariser une extrémité de chaque patte de centrage avec ledit flasque et des moyens (17) pour clipser l'extrémité libre (18, 19) de chaque patte de centrage sur ladite portion d'essieu en saillie.

3. Roulette selon la revendication 2, **caractérisée par le fait que** les moyens (17) pour clipser l'extrémité libre de chaque patte (15, 16) de centrage sur la portion d'essieu en saillie (14) sont constitués par au moins un ergot rentrant (20, 21) disposé sur ladite extrémité libre (18, 19) et au moins une gorge (22) réalisée dans la portion d'essieu en saillie (14) de façon que lesdits ergots rentrants (20, 21) soient aptes à plonger dans ladite gorge, au moins l'un des deux éléments "patte" et "portion d'essieu en saillie dans laquelle est réalisée ladite gorge" présentant une élasticité de déformation radiale en flexion.

4. Roulette selon l'une des revendications précédentes, **caractérisée par le fait que** les moyens (30) pour lier au moins un point dudit bras (4) audit flasque (8) de façon que les deuxième (6) et troisième (35) axes soient confondus sont constitués par un emboîtement (31) comportant deux parties complémentaires respectivement mâle (32) et femelle (33), la partie mâle (32) étant réalisée sur l'un (4) des deux éléments suivants: flasque (8) et bras (4), la partie femelle (33) étant réalisée sur l'autre élément (8).

5. Roulette selon la revendication 4, **caractérisée par le fait que** l'emboîtement mâle-femelle (31) est du type conique.

6. Roulette selon l'une des revendications 4 et 5, **caractérisée par le fait que** la partie mâle (32) de l'emboîtement est réalisée sur le bras (4) en étant sensiblement centrée sur le deuxième axe (6), la partie femelle (33) de l'emboîtement étant réalisée sur ledit flasque (8) en étant sensiblement centrée sur le troisième axe (35).

7. Roulette selon l'une des revendications précédentes, ladite roulette étant apte à être associée avec un objet du type meuble ou analogue en vue de favoriser son déplacement sur une surface donnée, **caractérisée par le fait qu'**elle comprend :
- une roue (1) apte à rouler autour d'un premier axe (2), ladite roue comportant un essieu (11), une bande de roulement (12) et une paroi de liaison (13) pour solidariser l'essieu avec la bande de roulement, ledit essieu comportant deux portions d'essieu (14, 114) en saillie de part et d'autre de ladite paroi de liaison (13),
- une chape (3) comportant deux bras (4, 104), lesdits bras comportant chacun un palier (5, 105), les deux paliers définissant un même deuxième axe (6, 106),
- un arbre (7) pour monter ladite roue en rotation par rapport aux deux paliers de façon qu'elle soit située entre les deux bras et que les premier et deuxième axes (2, 6, 106) soient confondus,
- deux flasques (8, 108) interposés respectivement entre les deux faces latérales (9, 109) de ladite roue et les deux bras (4, 104), lesdits deux flasques (8, 108) présentant sensiblement la forme générale de poches sphériques (34, 134) respectivement centrées sur un troisième (35) et un quatrième(135) axes,
- des moyens (10, 110) pour accrocher les deux flasques à ladite roue de façon que les premier (2), troisième (35) et quatrième (135) axes soient confondus, et
- des moyens (30, 130) pour lier au moins un point de chaque bras (4, 104) à un flasque (8, 108) de façon que les deuxième, troisième et quatrième axes (6, 106, 35, 135) soient confondus.

8. Roulette selon la revendication 7, **caractérisée par le fait qu'**elle comporte en outre au moins une entretoise (40) ayant une longueur L_{f} supérieure à la longueur Lₑ dudit essieu (11), ladite entretoise étant disposée entre les deux flasques (8, 108).

9. Roulette selon la revendication 8, **caractérisée par le fait que** ladite entretoise est constituée par un manchon (41) entourant ledit arbre (7), cedit manchon étant interposé entre l'arbre et l'essieu, chaque flasque (8, 108) comportant une percée centrale (42, 142), le diamètre desdites percées ayant une valeur supérieure à celle du diamètre dudit arbre (7) et inférieure à celle du diamètre extérieur du manchon (41).

## Patentansprüche

1. Laufrolle, die mit einem möbelartigen Gegenstand oder dergleichen verbindbar ist, um seine Verlagerung auf einer gegebenen Oberfläche zu erleichtern, umfassend:
- ein Rad (1), das um eine erste Achse (2) rollen kann,
- eine Abdeckung (3), die wenigstens einen Arm (4) aufweist, der ein eine zweite Achse (6) definierendes Lager (5) aufweist,
- eine Welle (7), mit der das Rad (1) in dem Lager (5) drehbar angebracht werden kann,
- eine Wange (8), die zwischen eine Seitenfläche (9) des Rades und den Arm eingefügt ist und im wesentlichen die allgemeine Form einer sphärischen Pfanne (34), die auf eine dritte Achse (35) zentriert ist, besitzt, und
- Mittel (10) zum Einhaken der Wange an dem Rad, derart, daß die erste Achse (2) und die dritte Achse (35) zusammenfallen,
**dadurch gekennzeichnet, daß** sie außerdem umfaßt:
- Mittel (30), die wenigstens einen Punkt des Arms (4) mit der Wange (8) in der Weise verbinden, daß die zweite Achse (06) und die dritte Achse (35) zusammenfallen.

2. Laufrolle nach Anspruch 1, bei der das Rad eine Radachse (11), eine Lauffläche (12) und eine die Radachse (11) mit der Lauffläche (12) verbindende Verbindungswand (13) umfaßt, wobei die Radachse einen in bezug auf die Verbindungswand (13) vorstehenden Radachsenabschnitt (14) aufweist, **dadurch gekennzeichnet, daß** die Mittel (10) zum Einhaken der Wange (8) an dem Rad (1) wenigstens zwei Ansätze (15, 16) für die Zentrierung der Wange an dem vorstehenden Radachsenabschnitt (14), Mittel zum Befestigen eines Endes jedes Zentrierungsansatzes an der Wange sowie Mittel (17) zum Einrasten des freien Endes (18, 19) jedes Zentrierungsansatzes an dem vorstehenden Radachsenabschnitt umfassen.

3. Laufrolle nach Anspruch 2, **dadurch gekennzeichnet, daß** die Mittel (17) zum Einrasten des freien Endes jedes Zentrierungsansatzes (15, 16) an dem vorstehenden Radachsenabschnitt (14) durch wenigstens einen vorspringenden Nocken (20, 21), der an dem freien Ende (18, 19) angeordnet ist, und wenigstens eine Einkehlung (22), die in dem vorstehenden Radachsenabschnitt (14) verwirklicht ist, gebildet sind, so daß die vorspringenden Nocken (20, 21) in die Einkehlung einsinken können, wobei das eine und/oder das andere der zwei Elemente "Ansatz" und "vorspringender Radachsenabschnitt, in dem die Einkehlung ausgebildet ist", bei einer Biegung eine radiale Verformungselastizität aufweist.

4. Laufrolle nach einem der vorhergehenden Ansprüche, **dadurch gekennzeichnet, daß** die Mittel (30) zum Verbinden wenigstens eines Punkts des Arms (4) mit der Wange (8) in der Weise, daß die zweite Achse (6) und die dritte Achse (35) zusammenfallen, aus einer Einpassung (31) gebildet sind, die zwei komplementäre Teile, ein Steckteil (32) bzw. ein Buchsenteil (33), umfaßt, wobei das Steckteil (32) an einem (4) der beiden Elemente Wange (8) und Arm (4) verwirklicht ist, während das Buchsenteil (33) am jeweils anderen Element (8) verwirklicht ist.

5. Laufrolle nach Anspruch 4, **dadurch gekennzeichnet, daß** das Steck/Buchsen-Gehäuse (31) vom konischen Typ ist.

6. Laufrolle nach einem der Ansprüche 4 und 5, **dadurch gekennzeichnet, daß** das Steckteil (32) der Einpassung an dem Arm (4) dadurch verwirklicht ist, daß es auf die zweite Achse (6) im wesentlichen zentriert ist, während das Buchsenteil (33) der Einpassung an der Wange (8) dadurch verwirklicht ist, daß es im wesentlichen auf die dritte Achse (35) zentriert ist.

7. Laufrolle nach einem der vorhergehenden Ansprüche, wobei die Rolle einem möbelartigen Gegenstand oder dergleichen zugeordnet werden kann, um seine Verlagerung auf einer gegebenen Oberfläche zu erleichtern, **dadurch gekennzeichnet, daß** sie umfaßt:
- ein Rad (1), das um eine erste Achse (2) rollen kann und eine Radachse (11), eine Lauffläche (12) und eine die Radachse mit der Lauffläche verbindende Verbindungswand (13) umfaßt, wobei die Radachse zwei Radachsenabschnitte (14, 114) aufweist, die beiderseits der Verbindungswand (13) vorstehen,
- eine Abdeckung (3), die zwei Arme (4, 104) umfaßt, die jeweils ein Lager (5, 105) umfassen, wobei die beiden Lager dieselbe zweite Achse (6, 106) definieren,
- eine Welle (7) für die drehbare Anbringung des Rades in den beiden Lagern in der Weise, daß sie sich zwischen den beiden Armen befindet und daß die ersten und zweiten Achsen (2, 6, 106) zusammenfallen,
- zwei Wangen (8, 108), die zwischen die beiden Seitenflächen (9, 109) des Rades und die beiden Arme (4, 104) eingefügt sind, wobei die beiden Wangen (8, 108) im wesentlichen die allgemeine Form sphärischer Pfannen (34, 134) besitzen, die auf eine dritte Achse (35) bzw. eine vierte Achse (135) zentriert sind,
- Mittel (10, 110), die die beiden Wangen an dem Rad in der Weise einhaken, daß die erste Achse (2), die dritte Achse (35) und die vierte Achse (135) zusammenfallen, und
- Mittel (30, 130), die wenigstens einen Punkt jedes Arms (4, 104) mit einer Wange (8, 108) in der Weise verbinden, daß die zweiten, dritten und vierten Achsen (6, 106, 35, 135) zusammenfallen.

8. Laufrollen nach Anspruch 7, **dadurch gekennzeichnet, daß** sie außerdem wenigstens einen Abstandshalter (40) umfaßt, der eine Länge L_{f} besitzt, die größer als die Länge Lₑ der Radachse (11) ist, wobei der Abstandshalter zwischen den beiden Wangen (8, 108) angeordnet ist.

9. Laufrolle nach Anspruch 8, **dadurch gekennzeichnet, daß** der Abstandshalter durch eine die Welle (7) umgebende Muffe (41) gebildet ist, wobei diese Muffe zwischen die Welle und die Radachse eingefügt ist, jede Wange (8, 108) ein mittiges Durchgangsloch (42, 142) aufweist und der Durchmesser dieser Durchgangslöcher einen Wert besitzt, der größer als jener des Durchmessers der Welle (7) und kleiner als jener des Außendurchmessers der Muffe (41) ist.

## Claims

1. A castor suitable for being associated with an article of the furniture type or the like in order to facilitate displacement thereof over a given surface, the castor comprising:
· a wheel (1) suitable for revolving about a first axis (2);
· a bracket (3) having at least one arm (4), said arm carrying a bearing (5) defining a second axis (6);
· a shaft (7) for rotatably mounting said wheel (1) relative to the bearing (5);
· a cheek plate (8) interposed between a side face (9) of the wheel and the arm, said cheek plate being generally in the form of a spherical cap (34) centered on a third axis (35); and
· means (10) for securing said cheek plate to said wheel in such a manner that the first and second axes (2, 35) coincide;
the castor being **characterized by** the fact that it further comprises:
· means (30) for connecting at least one point of said arm (4) to said cheek plate (8) in such a manner that the second and third axes (6, 35) coincide.

2. A castor according to claim 1, in which said wheel comprises an axle (11), a tread (12), and a connecting wall (13) for joining the axle (11) to the tread (12), said axle having an axle portion (14) projecting from said connection wall (13), the castor being **characterized by** the fact that the means (10) for securing said cheek plate (8) to said wheel (1) comprise at least two tabs (15, 16) for centering said cheek plate on the projecting axle portion (14), means for joining one end of each centering tab to said cheek plate, and means (17) for clipping the free end (18, 19) of each centering tab on said projecting axle portion.

3. A castor according to claim 2, **characterized by** the fact that the means (17) for clipping the free end of each centering tab (15, 16) on the projecting axle portion (14) are constituted by at least one reentrant stud (20, 21) disposed on said free end (18, 19), and at least one groove (22) formed in the projecting axle portion (14) so that said reentrant studs (20, 21) are suitable for penetrating into said groove, at least one of the two elements constituted by the "tab" and the "projecting axle portion in which said groove is made" presenting elasticity for radial deformation in bending.

4. A castor according to any preceding claim, **characterized by** the fact that the means (30) for connecting at least one point of said arm (4) to said cheek plate (8) in such a manner that the second and third axes (6, 35) coincide are constituted by interfitting means (31) comprising two complementary portions, respectively a male portion (32) and a female portion (33), the male portion (32) being made on one (4) of the following two elements: the cheek plate (8) and the arm (4); the female portion (33) being made on the other element (8).

5. A castor according to claim 4, **characterized by** the fact that the male-female interfitting means (31) are of the conical type.

6. A castor according to claim 4 or claim 5, **characterized by** the fact that the male portion (32) of the interfitting means is made on the arm (4) being substantially centered on the second axis (6), the female portion (33) of the interfitting means being made on said cheek plate (8) being substantially centered on the third axis (35).

7. A castor according to any preceding claim, said castor being suitable for being associated with an article of the furniture type or the like in order to facilitate displacement thereof over a given surface, the castor being **characterized by** the fact that it comprises:
· a wheel (1) suitable for revolving about a first axis (2), said wheel comprising an axle (11), a tread (12), and a connection wall (13) for joining the axle to the tread, said axle comprising two axle portions (14, 114) projecting from opposite sides of said connection wall (13);
· a bracket (3) comprising two arms (4, 104), each of said arms having a bearing (5, 105), the two bearings defining a common second axis (6, 106);
· a shaft (7) for mounting said wheel rotatably relative to the two bearings so that it is situated between the two arms and so that the first and second axes (2, 6, 106) coincide;
· two cheek plates (8, 108) interposed respectively between each of the two side faces (9, 109) of said wheel and the two arms (4, 104), said two cheek plates (8, 108) being substantially in the general shape of spherical caps (34, 134) respectively centered on third and fourth axes (35, 135);
· means (10, 110) for securing the two cheek plates to said wheel so that the first, third, and fourth axes (2, 35, 135) coincide; and
· means (30, 130) for connecting at least one point of each arm (4, 104) to a cheek plate (8, 108) in such a manner that the second, third, and fourth axes (6, 106, 35, 135) coincide.

8. A castor according to claim 7, **characterized by** the fact that it further comprises at least one spacer (40) of length L_{f} longer than the length Lₑ of said axle (11), said spacer being disposed between the two cheek plates (8, 108).

9. A castor according to claim 8, **characterized by** the fact that said spacer is constituted by a sleeve (41) surrounding said shaft (7), said sleeve being interposed between the shaft and the axle, each cheek plate (8, 108) having a central hole (42, 142), the diameter of said central holes being greater than the diameter of said shaft (7) and smaller than the outside diameter of said sleeve (41).
